# EUROPÄISCHE PATENTSCHRIFT

(11) **EP 0 981 721 B1**
(45) Veröffentlichungstag und Bekanntmachung des Hinweises auf die Patenterteilung: **27.08.2003**
(21) Anmeldenummer: 98907933.0
(22) Anmeldetag: 09.01.1998
(51) Int. Cl.: G01D 5/251, G08C 19/30

(54) **STELLUNGSMELDEANORDNUNG FÜR MOTORANTRIEBE**
POSITION SIGNALLING DEVICE FOR A MOTOR DRIVE
DISPOSITIF DE SIGNALISATION DE POSITION POUR COMMANDES PAR MOTEUR

(30) Priorität: 16.05.1997 DE 19720617
(43) Veröffentlichungstag der Anmeldung: 01.03.2000
(73) Patentinhaber: Maschinenfabrik Reinhausen GmbH, 93059 Regensburg (DE)
(72) Erfinder: DOHNAL, Dieter, D-93138 Lappersdorf (DE); GRIESBACHER, Franz, D-93096 Köfering (DE); HOLMER, Michael, D-94336 Hunderdorf (DE)
(86) Internationale Anmeldenummer: EP9800090
(87) Internationale Veröffentlichungsnummer: WO98053276

(56) Entgegenhaltungen:
- DE-A- 2 701 572
- DE-A- 2 720 761
- FR-A- 2 317 629
- GB-A- 2 265 587
- US-A- 5 675 250
- Betriebsanweisung "MOTORANTRIEB MA7", Maschinenfabrik Reinhausen GmbH, Nr. BA 40/90 de - 0391/2000

## Beschreibung

Die Erfindung betrifft eine Stellungsmeldeanordnung für Motorantriebe von Stufenschaltern, Umstellern oder Tauchkernspulen.

Stellungsmeldeanordnungen als Bestandteil des Motorantriebes dienen zur Stellungsfernanzeige bzw. -information der jeweiligen aktuellen Stellung des Stufenschalters o.ä.
Sie erfassen diese aktuelle Stellung elektrisch und bereiten die gewonnenen Informationen entsprechend auf; diese aufbereiteten Informationen wiederum sind Ausgangspunkt und Voraussetzung für die eigentliche (Fern-)Stellungsanzeige, die beispielsweise optisch durch eine Lampentafel oder ein Zeigerinstrument erfolgt.

Solche Stellungsmeldeanordnungen sind aus der Betriebsanweisung "Motorantrieb MA7", Impressum BA40/90de-0391/2000 der Anmelderin bekannt.
Sie bestehen aus einer Meldekontaktanordnung, bei der eine Vielzahl von einzelnen Meldekontakten, die unterschiedlichen Betriebsstellungen des Stufenschalters o.ä. zugeordnet sind, in einem Kreis angeordnet sind und von einem beweglichen Schleifkontakt beschaltbar sind.
In der Praxis sind zahlreiche unterschiedliche Varianten der Verarbeitung der gewonnenen Informationen über die aktuelle Stellung üblich und für die unterschiedlichen Anwendungsfälle einsetzbar:
Stellungsmeldeanordnung für Lampentafeln schalten mit Unterbrechung von einem Meldekontakt zum nächsten. Der bewegliche Schleifkontakt und die Meldekontakte der Kontaktbahn sind an Anschlußklemmen herausgeführt.
Stellungsmeldeanordnungen für Fernanzeige durch Zeigerinstrumente schalten ohne Unterbrechung von einem Meldekontakt zum nächsten. Für n Betriebsstellungen werden n -1 Stufenwiderstände zwischen den Stellungskontakten eingebaut. Anfang und Ende der Kontaktbahn sowie der bewegliche Schleifkontakt sind an Anschlußklemmen herausgeführt.
Stellungsmeldeanordnungen mit Diodenmatrix liefern ein codiert aufbereitetes Signal, z.B. in BCD- oder Gray-Code.
Stellungsmeldeanordnungen für dekadische Lampentafeln ermöglichen eine dekadische Anzeige.
Bei Stellungsmeldeanordnungen mit Öffnerkontaktbahn öffnet der Kontakt in der jeweiligen Betriebsstellung.

Nach dem Stand der Technik werden für jeden der angesprochenen Anwendungsfälle spezielle, besonders gestaltete und mit zusätzlichen, auf den speziellen Einsatzfall zugeschnittenen Bauelementen konfektionierte Meldekontaktanordnungen verwendet. Bei der Ausführung für die Fernanzeige durch ein Zeigerinstrument z.B., in der Regel ein Kreuzspulinstrument, sind die erforderlichen Einzelwiderstände direkt zwischen den einzelnen Meldekontakten, die vom Schleifkontakt bestrichen werden, vorgesehen.

Diese bekannten - für den jeweiligen Anwendungsfall spezialisierten - Stellungsmeldeanordnungen weisen mehrere Nachteile auf:
Zum einen ist das Fertigen und Vorhalten der unterschiedlichen und mit unterschiedlichen Bauelementen in unterschiedlicher Konfiguration bestückten Meldekontaktanordnungen aufwendig und teuer.
Zum anderen ist es nicht möglich, die Stellungsmeldeanordnung flexibel an sich ändernde Erfordernisse anzupassen, die sich z.B. dadurch ergeben können, daß kurzfristig die Darstellungsart der Stellungsanzeige geändert werden soll, etwa eine bisherige Lampentafel durch eine Zeigeranordnung mit einem Kreuzspulinstrument ersetzt werden soll.

Aufgabe der Erfindung ist es, eine gattungsgemäße Stellungsmeldeanordnung anzugeben, die bausteinartig komplettierbar ist und auf einfache Weise die wahlweise Realisierung der unterschiedlichsten Möglichkeiten der Informationsverarbeitung der Stellung des Stufenschalters o.ä. und damit der Fernanzeige bzw. Darstellungsform dieser Information gestattet.

Diese Aufgabe wird durch eine gattungsgemäße Stellungsmeldeanordnung mit den Merkmalen des ersten Patentanspruches gelöst.
Die abhängigen Ansprüche betreffen besonders vorteilhafte Weiterbildungen der Erfindung.

Erfindungsgemäß besteht die Stellungsmeldeanordnung aus zwei räumlich getrennten Baugruppen, die elektrisch miteinander verbunden sind:
― einer Meldekontaktanordnung zur Gewinnung der Informationen über die jeweilige Betriebsstellung des Motorantriebes
― einem Stellungsmeldemodul zur Verarbeitung der Information entsprechend der gewünschten Anzeigeform der Betriebsstellung des Motorantriebes.

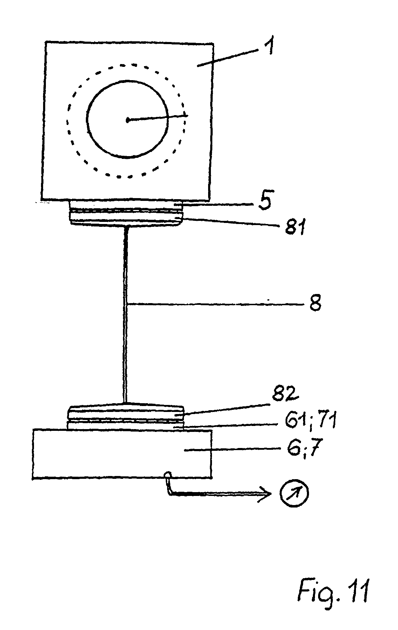

In Figur 11, die weiter unten noch näher erläutert wird, ist diese Aufteilung in die dort oben dargestellte Meldekontaktanordnung und das unten dargestellte Stellungsmeldemodul schematisch gezeigt.

Besonders vorteilhaft an der erfindungsgemäßen Lösung ist die universelle Ausführung der gesamten Meldekontaktanordnung, die nicht mehr auf bestimmte Anwendungsfälle besonders zugeschnitten werden muß.
Durch die erfindungsgemäße räumliche Trennung von Meldekontaktanordnung zur Informationsgewinnung einerseits und leicht auswechselbarem Stellungsmeldemodul zur Informationsverarbeitung andererseits ist eine einfache Anpassung an alle industriellen Gegebenheiten allein durch Auswechseln des Stellungsmeldemoduls möglich.
Ein weiterer Vorteil der Erfindung besteht darin, daß die Anordnung der zur Informationsverarbeitung notwendigen Bauelemente, wie Widerstände (für Zeigeranzeige), Dioden (für codierte Informationen) oder Relais (für Öffnerkontaktreihen) auf der eigentlichen Meldekontaktanordnung entfällt. Dies ist ein wesentlicher Unterschied gegenüber dem Stand der Technik. Die Meldekontaktanordnung wird dadurch einfacher und technologisch günstiger herstellbar, die Konfektionierung der o.a. Bauteile im separaten Stellungsmeldemodul ist ebenfalls günstiger - gerade auch beim möglicherweise notwendigen Auswechseln einzelner defekt gewordener Bauteile im Betrieb.
Besonders vorteilhaft kann das leicht auswechselbare Stellungsmeldemodul gleichzeitig als Übergabestelle für die elektrischen Anschlußleitungen, die zur jeweiligen Fernanzeige führen, dienen.
In einer weiteren besonders vorteilhaften Ausführungsform der Erfindung sind die elektrischen Bauelemente in den separaten Stellungsmeldemodulen jeweils derart angeordnet und beschaltet, daß durch einfaches Verdrehen der entsprechenden Steckverbinder um 180 Grad und Wiederaufsetzen auf das korrespondierende Modul der erfaßte Drehsinn der durchlaufenen Betriebsstellungen geändert werden kann.

Die Erfindung soll nachfolgend anhand von Zeichnungen noch näher erläutert werden. Es zeigen:
- Fig. 1: eine Meldekontaktanordnung als Bestandteil der erfindungsgemäßen Stellungsmeldeanordnung allein
- Fig. 2: die Beschaltung dieser Meldekontaktanordnung an einem ersten Übergabestecker
- Fig. 3: eine Korrespondenztabelle zwischen den separaten Kontaktstücken der Stellungsmeldeanordnung, die den möglichen Betriebsstellungen 1 bis 36 des Motorantriebes entsprechen und den einzelnen Pins des Übergabesteckers
- Fig. 4: einen Stromlaufplan eines ersten Stellungsmeldemoduls
- Fig. 5: einen weiteren Stromlaufplan eines zweiten Stellungsmeldemoduls
- Fig. 6: einen weiteren Stromlaufplan eines dritten Stellungsmeldemoduls
- Fig. 7: einen weiteren Stromlaufplan eines vierten Stellungsmeldemoduls
- Fig. 8: einen weiteren Stromlaufplan eines fünften Stellungsmeldemoduls
- Fig. 9: das in Fig. 7 mit seinem Stromlaufplan dargestellte vierte Stellungsmeldemodul
- Fig. 10: das in Fig. 8 mit seinem Stromlaufplan dargestellte fünfte Stellungsmeldemodul
- Fig. 11: eine schematische Gesamtdarstellung einer erfindungsgemäßen Stellungsmeldeanordnung

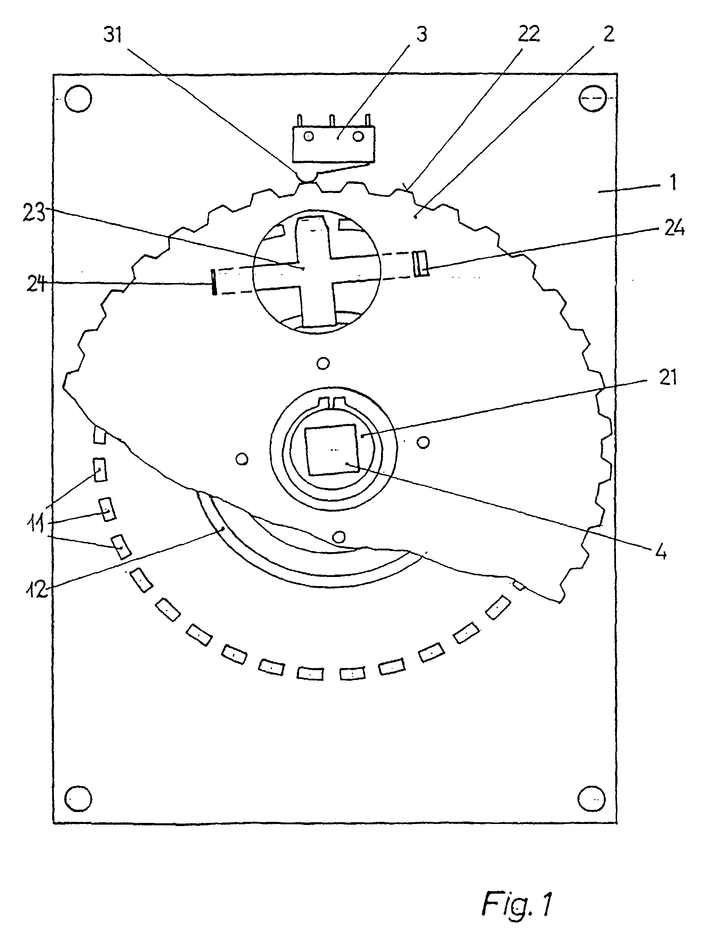

Die in Figur 1 dargestellte Meldekontaktanordnung weist eine Platine 1 auf, diese wiederum enthält kreisförmig angeordnete einzelne, voneinander isolierte, Meldekontakte 11. Sie weist weiterhin auf einem konzentrischen Kreis dazu einen durchgehenden Ableitkontaktring 12 auf. Außerhalb der Kontaktbahnen ist auf der Platine 1 ein Mikroschalter 3 angeordnet, der einen Betätigungshebel 31 aufweist. Die Meldekontaktanordnung besteht weiterhin aus einer Nockenscheibe 2, die drehbar auf der Platine 1 gelagert ist, wozu ein Lager 21 dient, das zentrisch im Mittelpunkt der konzentrischen Kontaktbahnen von Meldekontakten 11 und Ableitkontaktring 12 vorgesehen ist. Der Antrieb erfolgt durch eine Welle 4. Die Stirnseite der Nockenscheibe 2 weist eine Nockenkontur 22 auf, die mit dem Betätigungshebel 31 des Mikroschalters 3 korrespondiert. Auf der der Platine 1 zugewandten Seite ist auf der Nockenscheibe 2 eine leitende Kontaktbrücke 23 angeordnet, die an einem Ende die Meldekontakte 11 beschaltet und die mit einem anderen freien Ende ständig auf dem Ableitkontaktring 12 schleift. Die Kontaktbrücke 23 ist in Öffnungen 24 eingesteckt.
Mit dieser Anordnung sind bei Drehung der Nockenscheibe 2 unterschiedliche einzelne Meldekontakte 11 nacheinander mit dem Ableitkontaktring 12 verbindbar. Gleichzeitig wird durch die Nockenkontur 22 der in den elektrischen Kreis eingeschaltete Mikroschalter 3 betätigt. Dies geschieht derart, daß der Mikroschalter 3 jeweils den Stromkreis öffnet, bevor die Kontaktbrücke 23 bei einer Drehbewegung den bisherigen Meldekontakt vollständig verläßt und den Stromkreis wieder schließt, nachdem die Kontaktbrücke 23 den neuen Meldekontakt erreicht hat. Es findet also eine unterbrechende Umschaltung statt. Eine solche Anordnung ist Gegenstand der nicht vorveröffentlichten deutschen Patentanmeldung 197 05 576.

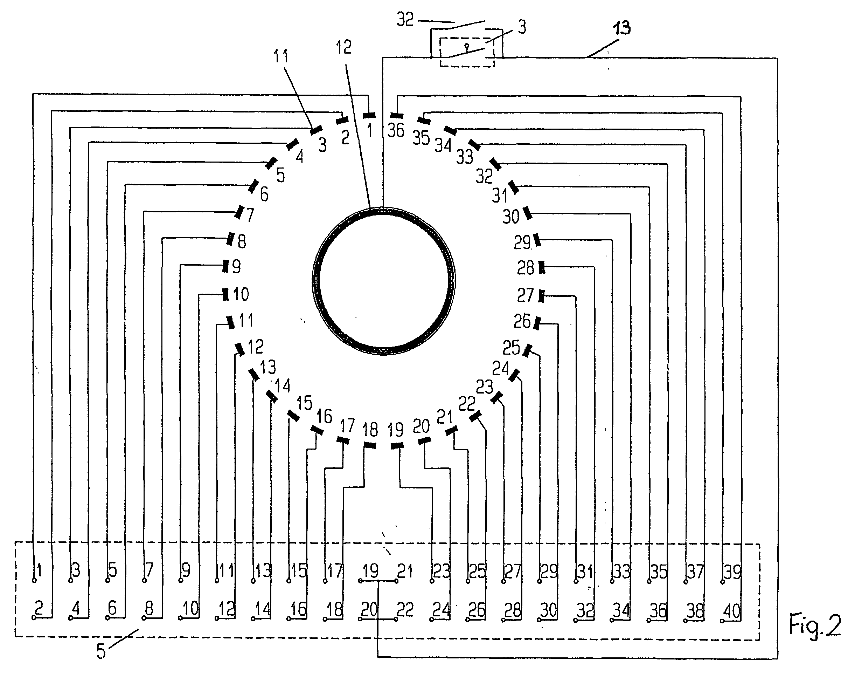

In Figur 2 ist gezeigt, daß an der Meldekontaktanordnung ein erster Steckverbinder 5 angeordnet ist, dessen Pins 1 bis 40 elektrisch mit den Meldekontakten und den aus Ableitkontaktring und Mikroschalter gebildeten Stromkreis in Verbindung stehen. Aus dieser Figur ist weiterhin ersichtlich, daß der Mikroschalter 3 mittels einer elektrisch leitenden Brücke 32 überbrückbar ist, d.h. wirkungslos gemacht werden kann. Weiter oben wurde bereits geschrieben, daß durch den Mikroschalter 3 eine unterbrechende Umschaltung realisiert wird. Ist in besonderen Anwendungsfällen, wie z.B. zur Ansteuerung eines Anzeigeinstrumentes, eine brückende Umschaltung gewünscht, so kann auf einfache Weise durch die Überbrückung 32 der Mirkoschalter 3 wirkungslos gemacht werden, ohne daß die Meldekontaktanordnung selbst in ihrer Bauweise verändert werden muß.

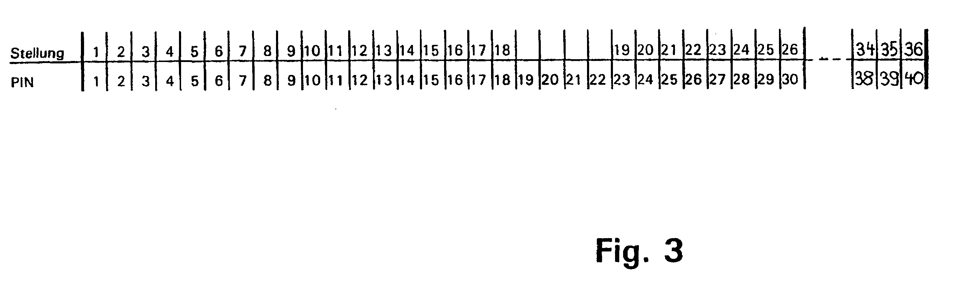

Figur 3 zeigt eine Korrespondenztabelle der in Figur 2 dargestellten Beschaltung. In der oberen Zeile sind die jeweiligen möglichen Betriebsstellungen 1 bis 36, die entsprechenden Meldekontakten zugeordnet sind, dargestellt. In der unteren Zeile sind die entsprechenden Pins 1 bis 40 des ersten Steckverbinders 5 dargestellt, die mit diesen jeweils elektrisch in Verbindung stehen. In Verbindung mit Figur 2 ist zu erkennen, daß die Pins 19 bis 22 nicht mit bestimmten Meldekontakten, sondern mit dem aus Ableitkontaktring 12 und Mikroschalter 3 gebildeten Stromkreis elektrisch verbunden sind.

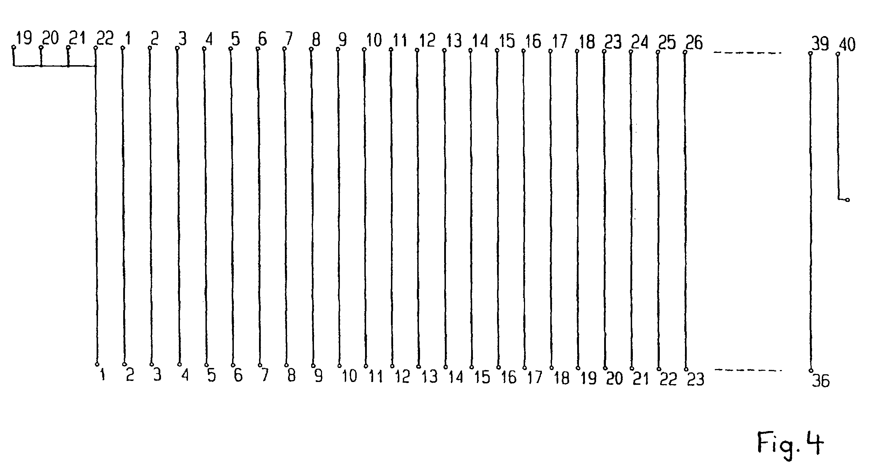

Figur 4 zeigt den Stromlaufplan eines ersten Stellungsmeldemoduls, in dem, räumlich getrennt von der bisher beschriebenen Meldekontaktanordnung, die Informationsverarbeitung der über den ersten Steckverbinder 5 übermittelten elektrischen Informationen erfolgt. In diesem Fall handelt es sich um eine einfache Schließerkontaktanordnung, bei der jeder einzelnen Betriebsstellung ein entsprechendes Ausgangssignal, das beispielsweise zu einer separaten Anzeigelampe führt, zugeordnet ist.

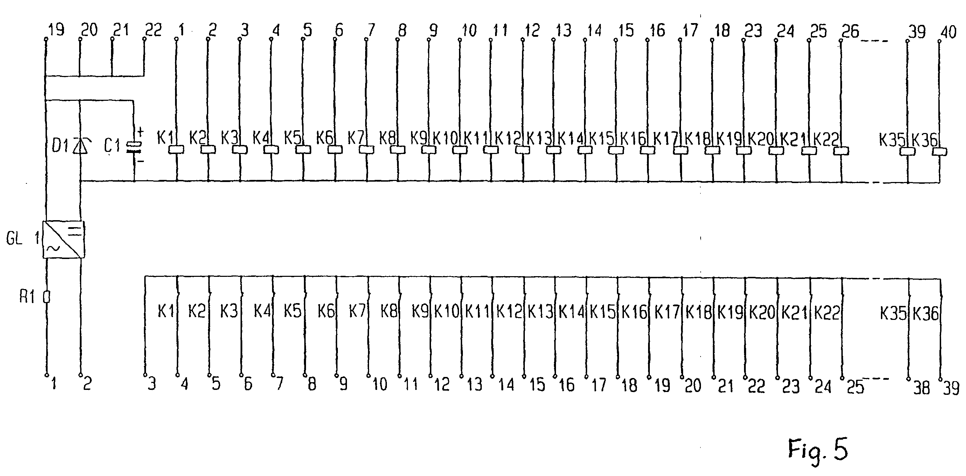

Figur 5 zeigt einen weiteren Stromlaufplan eines zweiten möglichen Stellungsmeldemoduls, das als Öffnerkontaktreihe wirkt.

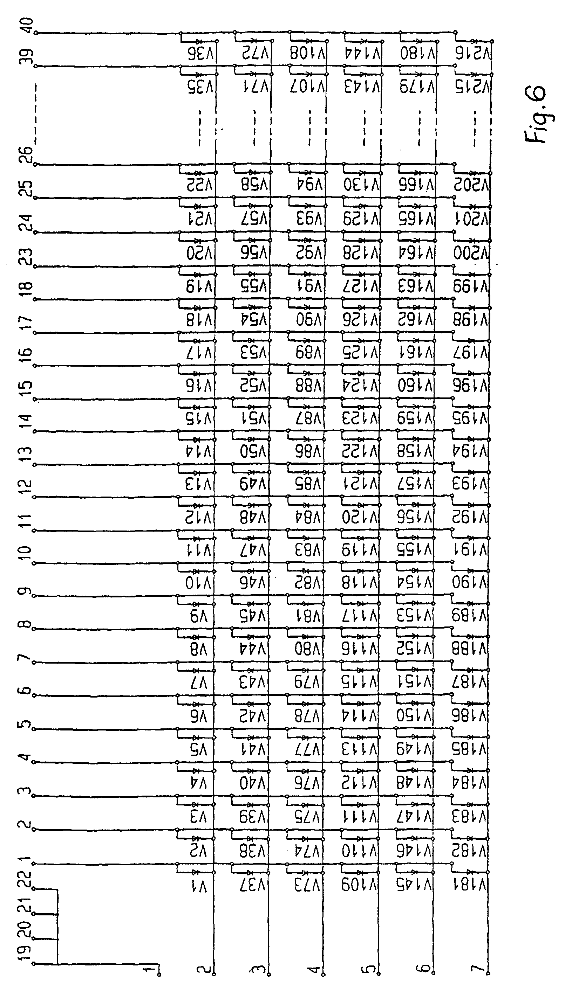

Figur 6 zeigt wiederum einen Stromlaufplan eines weiteren möglichen Stellungsmeldemoduls, in dem durch die gewählte Beschaltung und die gezeigte Diodenmatrix eine BCD-codierte Information über die jeweilige Betriebsstellung erzeugt und an den links dargestellten Übergabepunkten bereitgestellt wird.

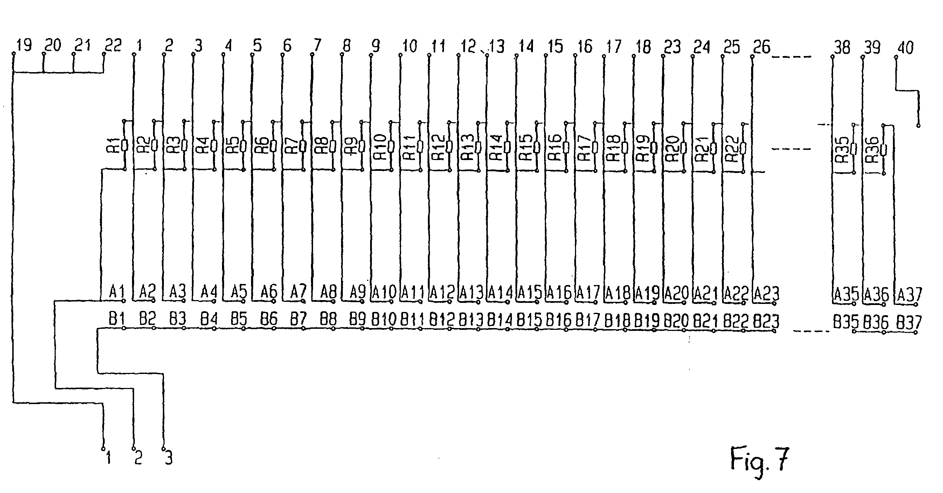

Figur 7 zeigt wiederum einen weiteren Stromlaufplan noch eines anderen möglichen Stellungsmeldemoduls, das hier als Widerstandsanordnung derart ausgebildet ist, daß an den unten dargestellten Übergabepunkten eine zur Ansteuerung eines Kreuzspulinstrumentes geeignete Information erzeugt wird. Bei dieser Variante, bei der ein kontinuierlich anzeigendes Anzeigeinstrument angesteuert wird, ist eine brückende Beschaltung der Meldekontakte erforderlich. In diesem Fall müßte also der weiter oben beschriebene Mikroschalter 3 durch die ebenfalls bereits beschriebene Brücke 32 überbrückt und damit in seiner Funktion wirkungslos gemacht werden.

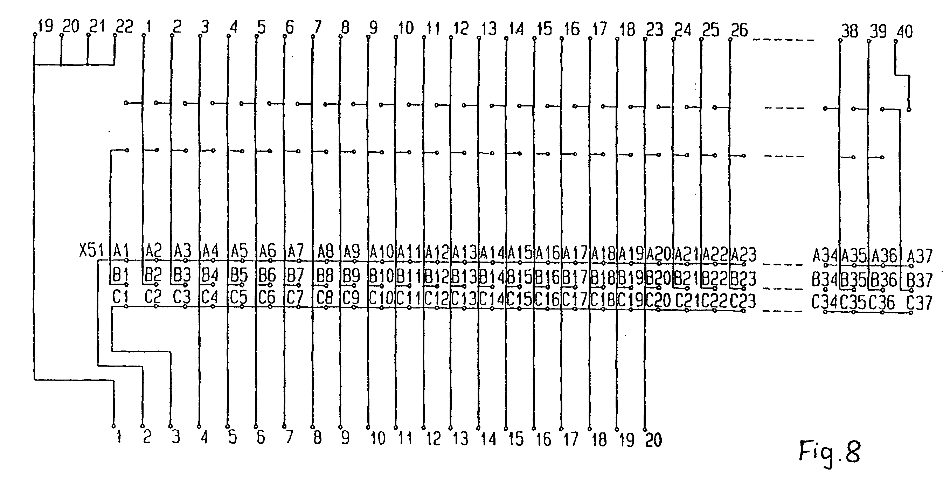

Figur 8 schließlich zeigt noch einen weiteren Stromlaufplan eines fünften Stellungsmeldemoduls. Dieses hier gezeigte Stellungsmeldemodul ist als sogenanntes Universalmodul ausgebildet, wobei keine feste elektrische Beschaltung im Inneren vorgenommen ist, sondern elektrische Kontaktpunkte durch Kontaktbrücken, sogenannte Jumper, beliebig miteinander verbindbar sind. Eine solche universelle Anordnung, wie sie hier dargestellt ist, ist für max. 35 Stellungen, in der Ausführung als Schließerkontaktreihe jedoch nur für max. 19 Betriebsstellungen geeignet.

Aus den in den Figuren 4 bis 8 beispielhaft dargestellten fünf unterschiedlichen Stromlaufplänen möglicher Stellungsmeldemodule, die jeweils als eigenständige Baugruppen räumlich getrennt von der - immer gleich aufgebauten - Meldekontaktanordnung angeordnet und mit dieser elektrisch verbindbar sind, wird deutlich, daß durch die gewählte Anordnung einer aus zwei Baugruppen - der immer gleichen Meldekontaktanordnung und dem variierbaren Stellungsmeldemodul - auf einfache Weise ein Anpassen an unterschiedliche Erfordernisse realisierbar ist. Dabei muß nur jeweils ein entsprechendes Stellungsmeldemodul verwendet werden, die übrigen Teile der gesamten Anordnung hingegen bleiben unverändert. Es ist auch möglich, durch Auswechseln der jeweiligen Stellungsmeidemodule auf einfache Weise die Funktion nachträglich zu ändern und die gesamte Anordnung damit an veränderte Anzeigeerfordernisse anzupassen.

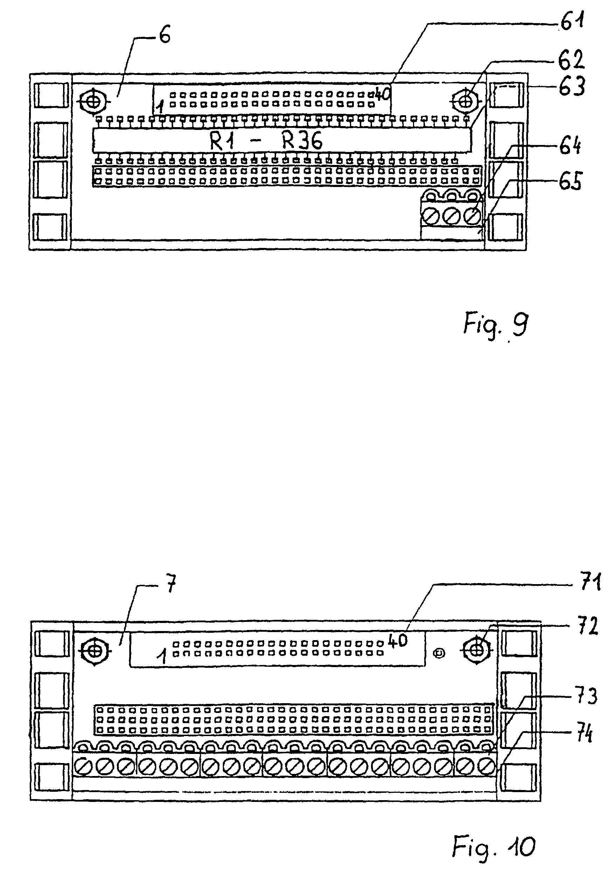

Figur 9 zeigt ein Stellungsmeldemodul 6, dessen Stromlaufplan bereits in Figur 7 dargestellt und weiter oben erläutert wurde. Es weist einen weiteren Steckverbinder 61 auf, der mit den Einzelwiderständen 63 im Inneren elektrisch verbunden ist. Am Modul sind weiterhin Befestigungsmittel 62 vorgesehen. An der Unterseite sind die Ausgangsklemmen 64 angeordnet. Die dortigen Bezeichnungen 65 entsprechen den im unteren Bereich der Figur 7 dargestellten Ausgangsbezeichnungen und führen zum Anzeigeinstrument.

Figur 10 zeigt ein weiteres Stellungsmeldemodul 7, dessen Stromlaufplan bereits in Figur 8 erläutert wurde; hierbei handelt es sich um die universelle, nachträglich bestückbare, Ausführung. Auch hier ist ein weiterer Steckverbinder 71 vorgesehen, der mit der bereits weiter oben erläuterten Schaltung im Inneren elektrisch in Verbindung steht. An der Unterseite sind wiederum Ausgangsklemmen 73 vorgesehen, deren Bezeichnungen 74 der Bezeichnung der Ausgangspunkte im unteren Teil des in Figur 8 gezeigten zugehörigen Stromlaufplanes entspricht. Durch nachträglich aufsteckbare Kontaktbrücken ist bei diesem Stellungsmeldemodul 7 die jeweilige Matrix zur Informationsverarbeitung auch nachträglich frei wählbar.

Figur 11 schließlich zeigt noch einmal zusammenfassend die gesamte erfindungsgemäße Stellungsmeldeanordnung in schematischer Darstellung.

Im oberen Teil befindet sich die Meldekontaktanordnung 1, die den ersten Steckverbinder 5 mit den wie weiter oben beschrieben elektrisch zugeordneten Anschlüssen aufweist.
Räumlich davon entfernt sind Stellungsmeldemodule, beispielsweise die beschriebenen und in den Figuren 9 und 10 dargestellten Module 6 oder 7 angeordnet, die ebenfalls jeweils einen Steckverbinder 61 bzw. 71 aurweisen. Die Verbindung zwischen diesen beiden Baugruppen wird durch eine elektrische Verbindungsleitung 8 hergestellt, die an ihren beiden Enden Steckerleisten 81, 82 aufweist, die jeweils mit den Pins der Steckverbinder 5 einerseits und 61 bzw. 71 andererseits korrespondieren.
Natürlich können anstelle der beschriebenen Stellungsmeldemodule 6 oder 7 auch beliebige andere solche Module mit anderen Informationsverarbeitungsmodi angeschlossen werden. Damit ist, wie bereits erläutert, auf einfache Weise ohne Eingriff in den Bereich der Meldekontaktanordnung 1 eine einfache Anpassung der gesamten Anordnung an jeder Anzeige, die in Figur 11 nur andeutungsweise dargestellt ist, möglich.

## Patentansprüche

1. Stellungsmeldeanordnung für Motorantriebe von Stufenschaltern, Umstellern oder Tauchkernspulen,
wobei eine Meldekontaktanordnung (1) vorgesehen ist, die eine Vielzahl von festen Meldekontakten (11) aufweist, die unterschiedlichen Betriebsstellungen des Stufenschalters, des Umstellers oder der Tauchkernspule zugeordnet sind,
wobei jeder der festen Meldekontakte (11) mittels einer drehbaren, leitenden Kontaktbrücke (23) kontaktierbar ist, die ihrerseits zu einer Signalableitung (13) führt
und wobei Mittel zur Informationsverarbeitung bzw. -auswertung der von der Meldekontaktanordnung (1) übermittelten Informationen vorgesehen sind,
**dadurch gekennzeichnet,**
**daß** die Kontaktbrücke (23) über einen zwischengeschalteten Sprungschalter (3) mit der Signalableitung (13) verbunden ist, die wiederum zu den Mitteln zur Informationsverarbeitung bzw. -auswertung führt, wobei der Sprungschalter (3) bei der Umschaltung zwischen benachbarten festen Meldekontakten (11) die elektrische Verbindung von der Kontaktbrücke (23) zur Signalableitung (13) kurzzeitig unterbricht,
**daß** die Mittel zur Informationsverarbeitung bzw. -auswertung in einem Stellungsmeldemodul (6, 7) in einem separaten Gehäuse räumlich getrennt von der Meldekontaktanordnung (1) vorgesehen sind,
**daß** die Verbindung zwischen Meldekontaktanordnung (1) und Stellungsmeldemodul (6, 7) mittels an sich bekannter erster und zweiter Steckverbinder (5; 61, 71) und zwischengeschalteter elektrischer Verbindungsleitung (8) mit korrespondierenden Steckern (81, 82) erfolgt, wobei mindestens einer der Steckverbinder (5; 61, 71) symmetrisch ausgestaltet ist und die Signalableitung (13) und die festen Meldekontakte (11) derart mit dem ersten Steckverbinder (5) elektrisch in Verbindung stehen, daß durch Umstecken des mindestens einen symmetrischen Steckverbinders (5; 61, 71) um 180 Grad zum korrespondierenden Stecker (81, 82) der Drehsinn der durchlaufenen Betriebsstellung der Meldekontakte (11) geändert wird.

2. Stellungsmeldeanordnung nach Patentanspruch 1,
**dadurch gekennzeichnet,**
**daß** die Mittel zur Informationsverarbeitung aus einer elektrischen Schaltung bestehen, derart, daß die Informationen zu einer Stellungsmeldung mittels Lampentafel verarbeitet werden.

3. Stellungsmeldeanordnung nach Patentanspruch 1,
**dadurch gekennzeichnet,**
**daß** die Mittel zur Informationsverarbeitung aus einer elektrischen Schaltung bestehen, derart, daß die Informationen zu einer Stellungsmeldung mittels eines Zeigerinstrumentes verarbeitet werden.

4. Stellungsmeldeanordnung nach Patentanspruch 1,
**dadurch gekennzeichnet,**
**daß** die Mittel zur Informationsverarbeitung aus einer elektrischen Schaltung bestehen, derart, daß die Informationen mittels einer Diodenmatrix zu einer Stellungsmeldung nach einem Code, beispielsweise einem BCD- oder GRAY-Code, verarbeitet werden.

5. Stellungsmeldeanordnung nach Patentanspruch 1,
**dadurch gekennzeichnet,**
**daß** die Mittel zur Informationsverarbeitung aus einer elektrischen Schaltung bestehen, derart, daß die Informationen zu einer Stellungsmeldung für dekadische Lampentafeln verarbeitet werden.

6. Stellungsmeldeanordnung nach Patentanspruch 1,
**dadurch gekennzeichnet,**
**daß** die Mittel zur Informationsverarbeitung aus einer elektrischen Schaltung bestehen, derart, daß die Informationen zu einer Stellungsmeldung in Form von Öffnerkontaktreihen verarbeitet werden.

7. Stellungsmeldeanordnung nach Patentanspruch 1,
**dadurch gekennzeichnet,**
**daß** die Mittel zur Informationsverarbeitung aus einer universellen Brückenmatrix bestehen, derart, daß durch individuell in Verbindung bringbare elektrisch leitende Brücken die entsprechende Form der Informationen zu einer Stellungsmeldung erzielbar ist.

## Claims

1. Position-reporting arrangement for motor drives of tap selector switches, reversing devices or solenoid coils, wherein a reporting contact arrangement (1) is provided, which comprises a plurality of fixed reporting contacts (11), which are associated with different operational positions of the tap selector switch, the reversing device or the solenoid coil, wherein each of the fixed reporting contacts (11) can be contacted by means of a rotatable conductive contact bridge (23), which in turn leads to a signal branch line (13), and wherein means for information-processing or information-evaluating of the information data communicated by the reporting contact arrangement (1) are provided, **characterised in that** the contact bridge (23) is connected by way of an interposed snap switch (3) with the signal branch line (13), which in turn leads to the means for information processing or evaluating, wherein the snap switch (3) briefly interrupts the electrical connection from the contact bridge (23) to the signal branch line (13) on switching over between adjacent fixed reporting contacts (11), that the means for information processing or evaluating are provided in a position-reporting module (6, 7) in a separate housing spatially separated from the reporting contact arrangement (1), that the connection between the reporting contact arrangement (1) and the position-reporting module (6, 7) takes place by means of first and second plug connectors (5; 61, 71) and interconnected electrical connecting line (8), which are known per se, with corresponding plugs (81, 82), wherein at least one of the plug connectors (5; 61, 71) is structured symmetrically and the signal output line (13) and the fixed reporting contacts (11) stand in electrical connection with the first plug connector (5) in such a manner that the sense of rotation of the operational position, which is run through, of the reporting contacts (11) is varied by changing the plugging-in of the at least one symmetrical plug connectors (5; 61, 71) through 180 degrees relative to the corresponding plug.

2. Position-reporting arrangement according to claim 1, **characterised** thereby in that the means for information-processing consist of an electrical circuit in such a manner that the information data are processed into a position report by means of a lamp panel.

3. Position-reporting arrangement according to claim 1, **characterised in that** the means for information-processing consist of an electrical circuit in such a manner that the information data are processed into a position report by means of a pointer instrument.

4. Position-reporting arrangement according to claim 1, **characterised in that** the means for information-processing consist of an electrical circuit in such a manner that the information data are processed into a position report by means of a diode matrix according to a code, for example a BCD code or Gray code.

5. Position-reporting arrangement according to claim 1, **characterised in that** the means for information-processing consist of an electrical circuit in such a manner that the information data are processed into a position report for decade lamp panels.

6. Position-reporting arrangement according to claim 1, **characterised in that** the means for information-processing consist of an electrical circuit in such a manner that the information data are processed into a position report in the form of make-and-break contact rows.

7. Position-reporting arrangement according to claim 1, **characterised in that** the means for information-processing consist of a universal bridge matrix in such a manner that the appropriate form of the information data for a position report is achievable by electrically conducting bridges which can be individually brought into connection.

## Revendications

1. Dispositif de signalisation de position pour entraînements motorisés de commutateurs à gradins, d'ajusteurs de tension ou de bobines à noyau plongeur,
dans lequel est prévu un dispositif de contacts de signalisation (1) qui présente une pluralité de contacts de signalisation (11) fixes, associés aux différentes positions de service du commutateur à gradins, de l'ajusteur de tension ou de la bobine à noyau plongeur,
chacun des contacts de signalisation (11) fixes peut être mis en contact au moyen d'un pont de contact (23) conducteur, rotatif, qui pour sa part conduit à une dérivation (13) du signal, avec des moyens prévus pour le traitement et l'évaluation des informations transmises par le dispositif de contacts de signalisation (1),
**caractérisé en ce que**
le pont de contact (23) est relié, par un micro-contact (3) intercalé, avec la dérivation (13) du signal qui, pour sa part, conduit aux moyens de traitement et d'évaluation des informations, le micro-contact (3) interrompant brièvement, lors de la commutation entre contacts de signalisation (11) fixes adjacents, la liaison électrique du pont de contact (23) à la dérivation (13) du signal,
les moyens de traitement et d'évaluation des informations sont prévus dans un module de signalisation de position (6, 7) dans un boîtier séparé, séparément dans l'espace par rapport au dispositif de contacts de signalisation (1),
la liaison entre dispositif de contacts de signalisation (1) et module de signalisation de position (6, 7) est réalisée au moyen d'un premier et d'un deuxième connecteurs enfichables (5, 61, 71) connus en soi et d'un câble de liaison (8) électrique intercalé avec connecteurs (81, 82) correspondants, au moins un des connecteurs enfichables (5, 61, 71) étant conçu symétriquement et la dérivation (13) du signal ainsi que les contacts de signalisation (11) fixes étant reliés électriquement avec le premier connecteur enfichable (5) de manière que, par la rotation du, au moins un, connecteur enfichable symétrique (5, 61, 71), de 180 degrés par rapport au connecteur correspondant (81, 82), le sens de rotation de la position de service parcourue des contacts de signalisation (11) est modifié.

2. Dispositif de signalisation de position selon la revendication 1,
**caractérisé en ce que**
les moyens de traitement des informations sont constitués d'un circuit électrique de telle manière que les informations concernant une signalisation de position sont traitées au moyen d'un tableau de voyants.

3. Dispositif de signalisation de position selon la revendication 1,
**caractérisé en ce que**
les moyens de traitement des informations sont constitués d'un circuit électrique de telle manière que les informations concernant une signalisation de position sont traitées au moyen d'un instrument à aiguilles.

4. Dispositif de signalisation de position selon la revendication 1,
**caractérisé en ce que**
les moyens de traitement des informations sont constitués d'un circuit électrique de telle manière que les informations concernant une signalisation de position sont traitées au moyen d'une matrice de diodes pour une signalisation de position selon un code, par exemple un code DCB ou Gray.

5. Dispositif de signalisation de position selon la revendication 1,
**caractérisé en ce que**
les moyens de traitement des informations sont constitués d'un circuit électrique de telle manière que les informations concernant une signalisation de position sont traitées pour tableaux décadiques de voyants.

6. Dispositif de signalisation de position selon la revendication 1,
**caractérisé en ce que**
les moyens de traitement des informations sont constitués d'un circuit électrique de telle manière que les informations concernant une signalisation de position sont traitées sous forme de rangées de contacts repos.

7. Dispositif de signalisation de position selon la revendication 1,
**caractérisé en ce que**
les moyens de traitement des informations sont constitués d'une matrice universelle de ponts, de telle manière que, par des ponts électro-conducteurs pouvant être amenés individuellement en liaison, la forme correspondante des informations concernant une signalisation de position peut être obtenue.
